Europäisches Patentamt

European Patent Office

Office européen des brevets

(11) Veröffentlichungsnummer: **0 144 076**
**B1**

(12) # EUROPÄISCHE PATENTSCHRIFT

(45) Veröffentlichungstag der Patentschrift:
31.01.90

(51) Int. Cl.⁴: **H 04 Q 11/04, H 04 M 11/06**

(21) Anmeldenummer: **84114458.7**

(22) Anmeldetag: **29.11.84**

(54) **Dienstintegriertes, digitales Nachrichtenübertragungssystem.**

(30) Priorität: **01.12.83 DE 3343472**

(43) Veröffentlichungstag der Anmeldung:
**12.06.85 Patentblatt 85/24**

(45) Bekanntmachung des Hinweises auf die Patenterteilung:
**31.01.90 Patentblatt 90/5**

(84) Benannte Vertragsstaaten:
**AT BE CH DE FR GB IT LI LU NL SE**

(56) Entgegenhaltungen:
EP-A- 0 054 120
EP-A- 0 076 362
DE-A- 3 146 468

(73) Patentinhaber: **ANT Nachrichtentechnik GmbH,
Gerberstrasse 33, D-7150 Backnang (DE)**

(72) Erfinder: **Koeck, Klaus, Dipl.-Ing., Dunantstrasse 2,
D-7150 Backnang (DE)**
Erfinder: **Schomers, Josef, Dipl.-Ing., Villinger
Strasse 12, D-7150 Backnang (DE)**

## Beschreibung

Die Erfindung betrifft ein dienstintegriertes, digitales Nachrichtenübertragungssystem nach dem Oberbegriff des Patentanspruches. Ein solches System ist in der Nachrichtentechnischen Zeitschrift, Bd. 35 (1982) Heft 11 S. 680 bis 684 beschrieben. In diesem System werden verschiedene Breitband- und Schmalbanddienste (Fernsehen, Bildfernsprechen, Rundfunkton, Fernsprechen, Daten) von einer Zentrale an viele Teilnehmer übertragen. In der Gegenrichtung werden Bildfernsprechsignale als Breitbanddienste und verschiedene Schmalbanddienste übertragen. In der Zentrale ist für jeden der vielen Teilnehmer ein eigener Breitband- und ein eigener Zusatzkanal-Multiplexer für die Richtung Zentrale–Teilnehmer sowie für die Gegenrichtung ein eigener Rückkanal-Multiplexer notwendig.

Aufgabe der Erfindung ist es, das obige Nachrichtenübertragungssystem in einer Weise auszugestalten, die eine preiswerte Herstellung der in großer Zahl erforderlichen Zusatzkanal- und Rückkanal-Multiplexer erlaubt.

Diese Aufgabe wird durch ein Nachrichtenübertragungssystem nach dem Patentanspruch gelöst.

Dadurch, daß das Ton-Multiplexsignal einschließlich der Synchronisiersignale schon an zentraler Stelle, nämlich in der Ton-Aufbereitung, in der Form eines Leerplätze enthaltenden Rahmens aufbereitet wird, können die vielen teilnehmerindividuellen Zusatzkanal-Multiplexer sehr einfach aufgebaut werden, da in ihnen nur noch die Leerplätze mit den Bits für die Schmalbandsignale belegt werden müssen. Durch den Aufbau des Zusatzkanal-Multiplexers aus einem Demultiplexer und einem Multiplexer und ihrer Verbindung untereinander wird erreicht, daß diese Baugruppe auch als Rückkanal-Demultiplexer verwendet werden kann. Dies führt zu einer erforderlichen großen Anzahl gleicher Baugruppen, wodurch die Anwendung rationeller Massenherstellungsverfahren lohnend erscheint.

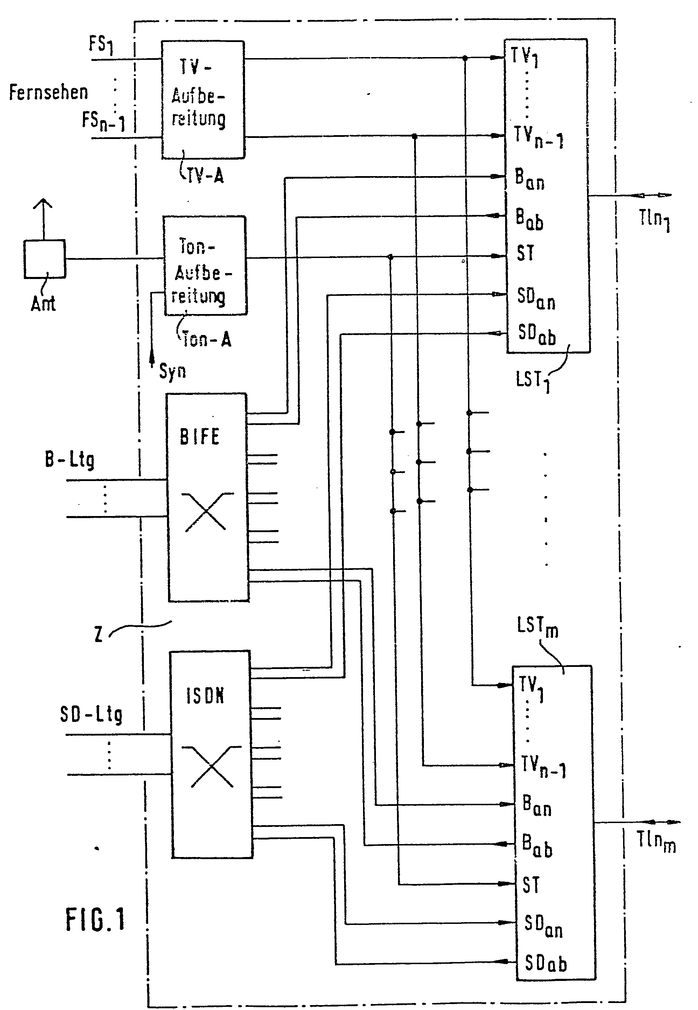

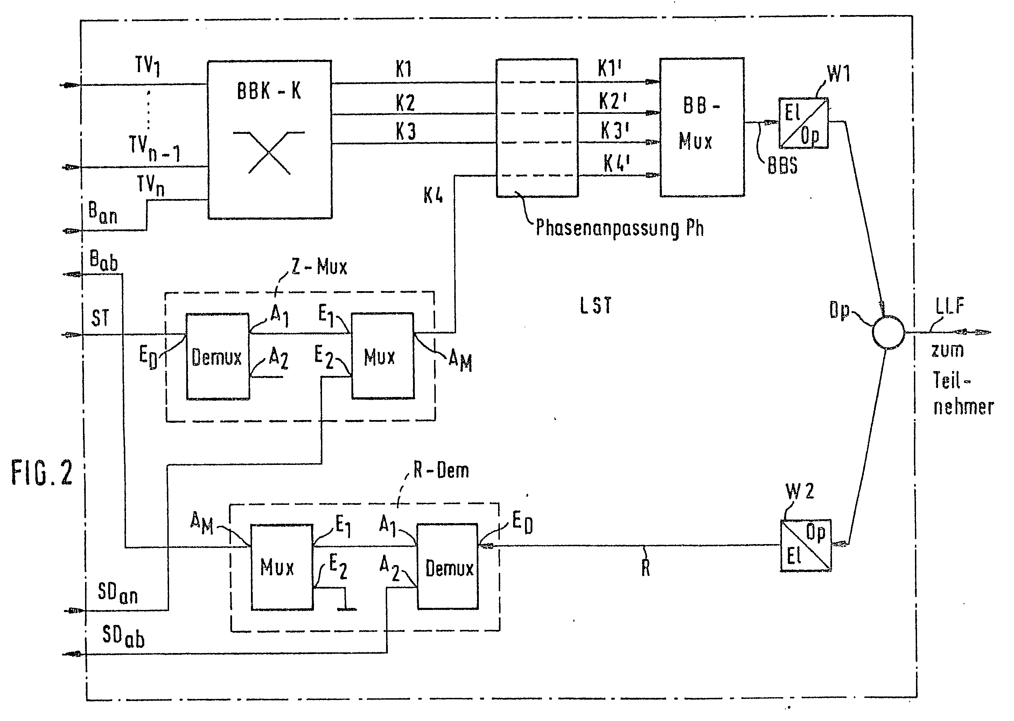

Die Erfindung wird anhand eines in den Figuren 1 und 2 dargestellten Ausführungsbeispiels erläutert. Die Figur 1 zeigt eine Zentrale Z des Nachrichtenübertragungssystems. In der Figur 2 ist einer der in der Zentrale vorhandenen Leitungssätze LST ausführlich dargestellt.

Es wird zunächst die Figur 1 beschrieben. Das Nachrichtenübertragungssystem besteht aus einer Zentrale Z und einer Vielzahl daran angeschlossener Teilnehmer. Es sind hier nur die zum ersten ($Tln_1$) und zum letzten Teilnehmer ($Tln_m$) führenden Teilnehmerleitungen gezeichnet. Jede dieser Teilnehmerleitungen führt innerhalb der Zentrale auf einen dem jeweiligen Teilnehmer zugeordneten Leitungssatz LST. Es ist hier nur der erste ($LST_1$) und der letzte ($LST_m$) Leitungssatz gezeichnet.

Da den Teilnehmern Fernsehprogramme angeboten werden, weist die Zentrale mehrere Eingänge $FS_1$ bis $FS_{n-1}$ für Fernsehprogramme auf. Hier werden die über Kabel übertragenen oder durch örtliche Antennen empfangenen Sendungen der Rundfunkanstalten sowie örtlich produzierte Darbietungen einer Baugruppe TV-Aufbereitung TV-A zugeführt. In dieser TV-Aufbereitung werden die Fernsehprogramme zu einer gleichen Zahl von digitalen Videosignalen $TV_1$ bis $TV_{n-1}$ mit einer Bitrate von je 34,368 Mbit/s aufbereitet, welche an alle Leitungssätze $LST_1$ bis $LST_m$ verteilt werden.

Da den Teilnehmern auch mehrere Ton-Rundfunkprogramme angeboten werden, weist die Zentrale Z eine Baugruppe Ton-Aufbereitung Ton-A auf. Dieser Ton-Aufbereitung werden von einer Antennenanlage Ant 30 stereofone oder 60 monofone Ton-Rundfunkprogramme zugeleitet. Dort werden sie zusammen mit Synchronisiersignalen Syn zu einem digitalen Ton-Multiplexsignal ST aufbereitet, so daß zu dessen Verteilung an die Leitungssätze $LST_1$ bis $LST_m$ eine Leitung genügt. Dieses Ton-Multiplexsignal weist die gleiche Bitrate wie die digitalen Videosignale $TV_1$ bis $TV_{n-1}$ auf.

Ferner ist ein Bildfernsprechdienst vorhanden, wozu in der Zentrale ein Bildfernsprechkoppelfeld BIFE vorgesehen ist. Über dieses Koppelfeld kann jeder der Teilnehmer $Tln_1$ bis $Tln_m$ zu jedem anderen dieser Teilnehmer eine Bildfernsprechverbindung aufbauen. Aber auch Verbindungen zu den Teilnehmern anderer Zentralen sind über die Bildfernsprech-Fern-Leitungen B-Ltg möglich. Das Bildfernsprechkoppelfeld BIFE ist über je zwei teilnehmerindividuelle Leitungen $B_{an}$ und $B_{ab}$, für jede Übertragungsrichtung eine, mit den Leitungssätzen LST verbunden, wobei über diese Leitungen digitale Bildfernsprechsignale mit der gleichen Bitrate wie die der digitalen Videosignale $TV_1$ bis $TV_{n-1}$ übertragen werden.

Ferner ist die Übertragung von Schmalbandsignalen, wie das herkömmliche Fernsprechen sowie Daten vorgesehen. Solche Dienste werden in einem Netz übertragen, für das sich die Bezeichnung «Integrated Services Digital Network», abgekürzt «ISDN», eingebürgert hat. In der Zentrale ist hierfür ein Schmalband-Koppelfeld ISDN vorgesehen, welches über je zwei teilnehmerindividuellen Leitungen $SD_{an}$ und $SD_{ab}$, für jede Übertragungsrichtung eine, mit den Leitungssätzen $LST_1$ bis $LST_m$ verbunden ist. So können die Teilnehmer $Tln_1$ bis $Tln_m$ untereinander Fernsprech- und Datenverbindungen herstellen. Für Verbindungen mit den Teilnehmern anderer Zentralen sind die ISDN-Leitungen SD-Ltg vorgesehen.

In der Figur 2 ist ein Leitungssatz LST ausführlich dargestellt. Am linken Rand sind die schon in der Figur 1 gezeichneten Leitungen dargestellt. Die Leitungen für die Videosignale $TV_1$ bis $TV_{n-1}$ sind mit einem Breitband-Koppelfeld BB-K verbunden. Auch die Leitung für das ankommende Bildfernsprechsignal $B_{an}$ ist als Videosignal $TV_n$ mit dem Breitband-Koppelfeld BB-K verbunden. Im Breitband-Koppelfeld kann jedes der z.B. 12 Videosignale $TV_1$ bis $TV_n$ zu einem der Breitband-Hauptkanäle K1 bis K3 durchgeschaltet werden. Weiter ist ein Zusatzkanal-Multiplexer Z-Mux vorgesehen, der das Ton-Multiplexsignal ST sowie die ankommenden Schmalbandsignale $SD_{an}$ zu einem Breitband-Zusatzkanal K4 zusammenfaßt.

Diese vier Breitband-Haupt- und Zusatzkanäle gelangen über eine Baugruppe zur Phasenanpassung Ph als Breitband-Haupt- und Zusatzkanäle K1' bis K4' zu einem Breitband-Multiplexer BB-Mux, wo diese Kanäle zu einem Breitband-Multiplexsignal BBS zusammengefaßt werden.

Dieses Breitband-Multiplexsignal gelangt über einen elektrisch-optischen Wandler W1, über einen Duplexer Dp und über eine Lichtleitfaser LLF zum Teilnehmer. Für die Übertragung eines Breitband-Rückkanals R in der Gegenrichtung ist ein optisch-elektrischer Wandler W2 und ein Rückkanal-Demultiplexer R-Dem vorgesehen. Dieser Rückkanal-Demultiplexer liefert an seinen Ausgängen das Bildfernsprechrücksignal $B_{ab}$ und das Schmalbandrücksignal $SD_{ab}$.

Bei der digitalen Übertragung von Ton-Rundfunkprogrammen ist eine Abtastfrequenz von 32 kHz üblich, wobei jeder Abtastwert mit 16 Bit übertragen wird. Daraus ergibt sich eine Bitrate von 512 kbit/s für einen monofonen Ton-Kanal oder von 1024 kbit/s für einen stereofonen Ton-Kanal. 30 stereofone Rundfunkprogramme ergeben also eine Bitrate von 30,72 Mbit/s. Trotzdem wird für das Ton-Multiplexsignal ein Rahmenaufbau mit der gleichen Bitrate wie die der digitalen Videosignale, nämlich mit 34,368 Mbit/s vorgesehen. In einem solchen Rahmen sind also noch genügend Bitplätze frei, welche in der Ton-Aufbereitung Ton-A mit dem Synchronisiersignal Syn und in den Zusatzkanal-Multiplexern Z-Mux mit den ankommenden Schmalbandsignalen $SD_{an}$ mit einer Bitrate von 2,048 Mbit/s belegt werden.

Der Zusatzkanal-Multiplexer Z-Mux und der Rückkanal-Demultiplexer R-Dem sind gleich aufgebaut und bestehen jeweils aus einem Multiplexer Mux und einem Demultiplexer Demux. Jeder Multiplexer Mux weist einen Ausgang $A_M$ sowie einen ersten Eingang $E_1$ und einen zweiten Eingang $E_2$ auf. Jeder Demultiplexer Demux weist einen ersten Ausgang $A_1$ und einen zweiten Ausgang $A_2$ sowie einen Eingang $E_D$ auf. Der erste Ausgang $A_1$ eines jeden Demultiplexers Demux ist mit dem ersten Eingang $E_1$ des zugehörigen Multiplexers Mux verbunden. Jeder Demultiplexer Demux gibt das an seinen Eingang $E_D$ angelegte Digitalsignal unverändert an seinem ersten Ausgang $A_1$ ab. An seinem zweiten Ausgang $A_2$ erscheinen nur die Bits des abzuzweigenden Signals. Jeder Multiplexer Mux gibt das an seinen ersten Eingang $E_1$ angelegte Digitalsignal bitratengleich an seinem Ausgang $A_M$ ab, wobei die dem an seinem zweiten Eingang $E_2$ anliegenden Signale zugeordneten Bits entsprechend diesem Signal überschrieben werden.

Im Zusatzkanalmultiplexer Z-Mux wird das Ton-Multiplexsignal ST an den Eingang $E_D$ des Demultiplexers Demux angelegt. Dieses Signal erscheint unverändert am ersten Ausgang $A_1$ und gelangt auf den ersten Eingang $E_1$ des Multiplexers Mux. An seinem zweiten Eingang $E_2$ liegen die Schmalbandsignale $SD_{an}$. So werden die im Ton-Multiplexsignal für die Schmalbandsignale bestimmten Leerplätze mit diesen gefüllt. Der so gebildete Breitband-Zusatzkanal K4 wird am Ausgang $A_M$ abgenommen und der Phasenanpassung Ph zugeleitet. Der zweite Ausgang $A_2$ des Demultiplexers Demux ist unbeschaltet.

Im Rückkanal-Demultiplexer R-Dem ist der Breitband-Rückkanal R mit dem Eingang $E_D$ des Demultiplexers verbunden. So erscheint an seinem ersten Ausgang $A_1$ das unveränderte Breitband-Rücksignal, während am zweiten Ausgang $A_2$ nur die Bits des abzuzweigenden Signals, in diesem Fall die Schmalband-Rücksignale $SD_{ab}$, erscheinen. Am zweiten Eingang $E_2$ des Multiplexers Mux liegt Erdpotential, was dem Signal «logisch Nein» entspricht. Dadurch werden im Breitband-Rücksignal R die Bitplätze der Schmalbandsignale mit «Nein» überschrieben und es entsteht so am Ausgang $A_M$ das Bildfernsprech-Rücksignal $B_{ab}$, welches über die Leitung $B_{ab}$ an das Bildfernsprechkoppelfeld BIFE (siehe Figur 1) und von dort an einen anderen Teilnehmer übertragen wird.

## Patentanspruch

Dienstintegriertes, digitales Nachrichtenübertragungssystem zur Übertragung einer Anzahl Breitband-Hauptkanäle (K1–K3, Fig. 2) sowie eines Breitband-Zusatzkanals (K4, Fig. 2) von einer Zentrale (Z, Fig. 1) an die Teilnehmer ($Tln_1$–$Tln_m$, Fig. 1), wobei in jedem Breitband-Hauptkanal (K1–K3) ein Videosignal ($TV_1$–$TV_n$, Fig. 2) übertragbar ist, wobei eines der Videosignale ($TV_n$, Fig. 2) ein von einem Bildfernsprechkoppelfeld (BIFE, Fig. 1) abgegebenes Bildfernsprechsignal ($B_{an}$) ist, wobei ferner in der Zentrale (Z) je Teilnehmer ($Tln_1$–$Tln_m$) ein Zusatzkanal-Multiplexer (Z-Mux, Fig. 2) vorgesehen ist, welcher aus einem Ton-Multiplexsignal (ST) sowie Schmalbandsignalen ($SD_{an}$) den Breitband-Zusatzkanal (K4) bildet, wobei das Ton-Multiplexsignal in einer zentralen Ton-Aufbereitung (Ton-A, Fig. 1) aus mehreren Ton-Rundfunkprogrammen gebildet wird, wobei ferner von den Teilnehmern ($Tln_1$–$Tln_m$) je ein Breitband-Rückkanal (R, Fig. 2) übertragen wird, welcher ein Bildfernsprechrücksignal ($B_{ab}$, Fig. 2) und Schmalbandrücksignale ($SD_{ab}$, Fig. 2) umfaßt, wobei in der Zentrale (Z) je Teilnehmer ($Tln_1$–$Tln_m$) ein Rückkanal-Demultiplexer (R-Dem, Fig. 2) vorgesehen ist, welcher den Breitband-Rückkanal (R) in das Bildfernsprechrücksignal ($B_{ab}$) und die Schmalbandrücksignale ($SD_{ab}$) zerlegt, dadurch gekennzeichnet, daß die Ton-Aufbereitung (Ton-A) so ausgestaltet ist, daß sie das Ton-Multiplexsignal und Synchronisiersignale (Syn) mit einem Rahmenaufbau abgibt, in welchem Leerplätze zum Einfügen der Schmalbandsignale ($SD_{an}$) durch den Zusatzkanal-Multiplexer (Z-Mux) vorgesehen sind, daß der Zusatzkanal-Multiplexer (Z-Mux) und der Rückkanal-Demultiplexer (R-Dem) gleich aufgebaut sind und jeweils aus einem Multiplexer (Mux, Fig. 2) und einem Demultiplexer (Demux, Fig. 2) bestehen, daß jeder Multiplexer (Mux) einen Ausgang ($A_M$, Fig. 2) sowie einen ersten ($E_1$, Fig. 2) und einen zweiten ($E_2$, Fig. 2) Eingang aufweist, daß jeder Demultiplexer (Demux) einen ersten ($A_1$, Fig. 2) und einen zweiten (A₂, Fig. 2) Ausgang sowie einen Eingang (E_D, Fig. 2) aufweist, daß der erste Ausgang (A₁) eines jeden Demultiplexers (Demux) mit dem ersten Eingang (E₁) des zugehörigen Multiplexers (Mux) verbunden ist, daß jeder Demultiplexer (Demux) so ausgebildet ist, damit ein an seinem Eingang (E_D) angelegtes Digitalsignal unverändert an seinem ersten Ausgang (A₁) erscheint und an seinem zweiten Ausgang (A₂) das abzuzweigende Signal erscheint, daß jeder Multiplexer (Mux) so ausgebildet ist, indem ein an seinen ersten Eingang (E₁) angelegtes Digitalsignal bitratengleich an seinem Ausgang (A_M) abgegeben wird, wobei die dem am zweiten Eingang (E₂) anliegenden Signal zugeordneten Bits entsprechend diesem Signal überschrieben werden, daß im Zusatzkanal-Multiplexer (Z-Mux) dem Eingang (E_D) des Demultiplexers (Demux) das Ton-Multiplexsignal (ST), dem zweiten Eingang (E₂) des Multiplexers (Mux) die Schmalbandsignale (SD_an) zugeführt werden und am Ausgang (A_M) des Multiplexers (Mux) der Breitband-Zusatzkanal (K4) abgenommen wird, daß im Rückkanal-Demultiplexer (R-Dem) der Eingang (E_D) des Demultiplexers (Demux) mit dem Breitband-Rückkanal (R) und der zweite Eingang (E_D) des Demultiplexers (Demux) mit dem Breitband-Rückkanal (R) und der zweite Eingang (E₂) des Multiplexers (Mux) mit Nein-Signalen beaufschlagt wird, am zweiten Ausgang (A₂) des Demultiplexers (Demux) die Schmalband-Rücksignale (SD_ab) abgenommen werden und am Ausgang (A_M) des Multiplexers (Mux) das Bildfernsprechrücksignal (B_ab) abgenommen wird.

**Claim**

Service-integrated digital communications transmission system for the transmission of a number of wide band main channels (K1–K3, Fig. 1) as well as a wide band additional channel (K4, Fig. 2) from an exchange (Z, Fig. 1) to the subscribers (Tln₁–Tln_m, Fig. 1), wherein a video signal (TV₁–TV_n, Fig. 2) is transmissible in each wide band main channel (K1–K3), wherein one of the video signals (TV_n, Fig. 2) is an image telephone signal (Ban) delivered by an image telephone coupling field (BIFE, Fig. 1), wherein an additional channel multiplexer (Z-Mux, Fig. 2) for each subscriber (Tln₁–Tln_m) is furthermore provided in the exchange (Z) and forms the wide band additional channel (K4) from a sound multiplex signal (ST) as well as narrow band signals (SD_an), wherein the sound multiplex signal is formed from several sound radio programs in a central sound preparation (Ton-A, Fig. 1), wherein a respective wide band return channel (R, Fig. 2) is furthermore transmitted from each of the subscribers (Tln₁–Tln_m) and comprises an image telephone return signal (B_ab, Fig. 2) and narrow band return signals (SD_ab, Fig. 2), wherein a return channel demultiplexer (R-Dem, Fig. 2) for each subscriber (Tln₁–Tln_m) is provided in the exchange and resolves the wide band return channel (R) into the image telephone return signal (B_ab) and the narrow band return signals (SD_ab), characterised thereby, that the sound preparation (Ton-A) is so structured that it delivers the sound multiplex signal and synchronising signals (Syn) with a frame build-up, in which empty places ares provided for the insertion of the narrow band signals (SD_an) by the additional channel multiplexer (Z-Mux), that the additional channel multiplexer (Z-Mux) and the return channel demultiplexer (R-Dem) are built up alike and each consist of a multiplexer (Mux, Fig. 2) and a demultiplexer (Demux, Fig. 2), that each multiplexer (Mux) displays an output (A_m, Fig. 2) as well as a first input (E₁, Fig. 2) and a second input (E₁, Fig. 2) and a second input (E₂, Fig. 2), that each demultiplexer (Demux) displays a first output (A₁, Fig. 2) and a second output (A₂, Fig. 2) as well as an input (E_D, Fig. 2), that the first output (A₁) of each demultiplexer (Demux) is connected with the first input (E₁) of the associated multiplexer (Mux), that each demultiplexer (Demux) is so constructed that a digital signal applied at its input (E_D) appears unchanged at its first output (A₁) and the signal to be branched off appears at its second output (A₂), that each multiplexer (Mux) is so constructed that a digital signal applied at its first input (E₁) is delivered at equal bit rate at its output (A_M), wherein the bits associated with the signal present at the second input (E₂) are written over in correspondence with this signal, that in the additional channel multiplexer (Z-Mux), the sound multiplex signal (ST) is fed to the input (E_D) of the demultiplexer (Demux), the narrow band signals (SD_an) are fed to the second input (E₂) of the multiplexer (Mux) and the wide band additional channel (K4) is taken off at the output (A_M) of the multiplexer (Mux), that in the return channel demultiplexer (R-Dem), the input (E_D) of the demultiplexer (Demux) is acted on by the wide band return channel (R) and the second input (E₂) of the multiplexer (Mux) is acted on by No-signals, the narrow band return signals (SD_ab) are taken off at the second output (A₂) of the demultiplexer (Demux) and the image telephone return signal (B_ab) is taken off at the output (A_M) of the multiplexer (Mux).

**Revendication**

Système de transmission numérique à intégration de services, pour transmettre une pluralité de canaux principaux à large bande (K1–K3, fig. 2) ainsi qu'un canal supplémentaire à large bande (K4, fig. 2) d'un central (Z, fig. 1) aux abonnés (Tln₁–Tln_m, fig. 1), un signal vidéo (TV₁–TV_n, fig. 2) pouvant être transmis dans chaque canal principal à large bande (K1–K3), l'un des signaux vidéo (TV_n, fig. 2) étant un signal vidéophonique (B_an) délivré par un champ de couplage vidéophone BIFE, fig. 1), le central (Z) comportant en outre, pour chaque abonné (Tln₁–Tln_m), un multiplexeur de canal supplémentaire (Z-Mux, fig. 2) qui, à partir d'un signal multiplex de son (ST) ainsi que de signaux à bande étroite (SD_an), forme le canal supplémentaire à large bande (K4), le signal multiplex de son étant formé dans un traitement-préparation-son central (son-A, fig. 1), à partir de plusieurs programmes de radiodiffusion de son, les abonnés (Tln₁–Tlnₘ) transmettant chacun un canal de retour à large bande (R, fig. 2) qui comporte un signal de réponse vidéophonique (Bₐᵦ, fig. 2) et des signaux de retour à bande étroite (SDₐᵦ, fig. 2), le central (Z) comportant, pour chaque abonné (Tln₁–Tlnₘ), un démultiplexeur de canal de retour (R-Dem, fig. 2), lequel décompose le canal de retour à large bande (R) en signal de retour vidéophonique (Bₐᵦ) et signaux de retour à bande étroite (SDₐᵦ), caractérisé par le fait que le traitement-préparation-son (Son-A) est constitué de manière à délivrer le signal multiplex de son et des signaux de synchronisation (Syn) avec une structure de trame dans laquelle il est prévu des places vides pour l'insertion des signaux à bande étroite (SDₐₙ) par le multiplexeur de canal supplémentaire (Z-Mux), par le fait que le multiplexeur de canal supplémentaire (Z-Mux) et le démultiplexeur de canal de retour (R-Dem) sont de constitutions identiques et sont constitués chacun par un multiplexeur (Mux, fig. 2) et par un démultiplexeur (Demux, fig. 2), par le fait que chaque multiplexeur (Mux) présente une première sortie (Aₘ, fig. 2) ainsi qu'une première (E₁, fig. 2) et une deuxième entrée (E₂, fig. 2), par le fait que chaque démultiplexeur (Demux) présente une première (A₁, fig. 2) et une deuxième sortie (A₂, fig. 2) ainsi qu'une entrée (E_D, fig. 2), par le fait que la première sortie (A₁) de chaque démultiplexeur (Demux) est reliée à la première entrée (E₁) du multiplexeur y afférent (Mux), par le fait que chaque démultiplexeur (Demux) est constitué de manière qu'un signal numérique appliqué à son entrée (E_D) apparaisse inchangé à sa première sortie (A₁) et que le signal à mettre en dérivation apparaisse à sa deuxième sortie (A₂), par le fait que chaque multiplexeur (Mux) est ainsi constitué qu'un signal numérique appliqué à sa première entrée (E₁) soit délivré avec le même débit binaire à sa sortie (Aₘ), les bits afférents au signal appliqué à la deuxième entrée (E₂) étant écrasés en correspondance avec ce signal, par le fait que, dans le multiplexeur de canal supplémentaire (Z-Mux), le signal multiplex de son (ST) est amené à l'entrée (E_D) du démultiplexeur (Demux), et les signaux à bande étroite (SDₐₙ) sont amenés à la deuxième entrée (E₂) du multiplexeur (Mux), et le canal supplémentaire à large bande (K4) est prélevé à la sortie (Aₘ) du multiplexeur (Mux), par le fait que, dans le démultiplexeur de canal de retour (R-Dem), l'entrée (E_D) du démultiplexeur (Demux) est attaquée par le canal de retour à large bande (R) et la deuxième entrée (E₂) du multiplexeur (Mux) est attaquée par des signaux NON, les signaux de retour à bande étroite (SDₐᵦ) étant prélevés à la deuxième sortie (A₂) du démultiplexeur (Demux), et le signal de retour vidéophonique (Bₐᵦ) étant prélevé à la sortie (Aₘ) du multiplexeur (Mux).

FIG.1

FIG.2

EP 0 144 076 B1